(19) Europäisches Patentamt
European Patent Office
Office européen des brevets

(11) **EP 4 734 035 A1**

(12) **EUROPEAN PATENT APPLICATION**
published in accordance with Art. 153(4) EPC

(43) Date of publication:
**29.04.2026 Bulletin 2026/18**

(21) Application number: **24825509.3**

(22) Date of filing: **07.03.2024**

(51) International Patent Classification (IPC):
**G06Q 50/04** *(2012.01)*

(52) Cooperative Patent Classification (CPC):
**G06Q 50/04**

(86) International application number:
**PCT/JP2024/008751**

(87) International publication number:
**WO 2024/262098 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023101859**

(71) Applicant: **Hitachi, Ltd.
Tokyo 100-8280 (JP)**

(72) Inventors:
• **ELLIS, Robert Joseph
Tokyo 100-8280 (JP)**
• **HUNABAD, Tejdeep Reddy
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **SCHEDULE CREATION SUPPORT DEVICE AND SCHEDULE CREATION SUPPORT METHOD**

(57)    A schedule creation support device (100) includes: a reception unit (111) that receives a plurality of tasks, a constraint condition in schedule generation for assigning execution dates and times to the plurality of tasks, metrics for evaluating the generated schedule, and a KPI; a constraint condition generation unit (112) that generates a plurality of generation constraint conditions by adding a deviation to the constraint conditions; a schedule generation unit (113) that generates an optimal schedule that satisfies the generation constraint condition; and a constraint evaluation unit (114) that outputs a generation constraint condition corresponding to a schedule in which the KPI is best among the generated schedules.

[FIG. 1]

*FIG. 1*

SCHEDULE CREATION SUPPORT DEVICE — 100
CONTROL UNIT — 110
RECEPTION UNIT — 111
CONSTRAINT CONDITION GENERATION UNIT — 112
SCHEDULE GENERATION UNIT — 113
CONSTRAINT EVALUATION UNIT — 114
STORAGE UNIT — 120
TASK DATABASE — 130
CONDITION DATABASE — 140
EVALUATION VALUE DATABASE — 150
SCHEDULE DATABASE — 160
PROGRAM — 128
INPUT/OUTPUT UNIT — 180

**Description**

Technical Field

The present invention relates to a schedule creation support device and a schedule creation support method for supporting schedule creation for assigning an execution date and time to a task.

Background Art

Creation of a maintenance schedule in a plant is to assign the date and time for executing individual tasks (work) such as inspection and replacement of each of facilities, devices, and components constituting the plant to satisfy an assignment condition (determine the date and time). The assignment condition includes the order of execution of a series of tasks, the deadline of the task, the number and skills of workers required to execute the task, equipment required for the task, and the like. In addition to the assignment conditions related to such individual tasks, there are constraint conditions of schedule creation such as the cost of the entire maintenance, the total number of workers, the maintenance deadline, the working time per day, and the number of pieces of equipment.

A schedule is created by solving an optimization problem that maximizes schedule metrics under assignment conditions and constraint conditions. Examples of the metrics include the total cost, the number of tasks for which assignment conditions are met, and the like.

As a maintenance plan support technique, there are inventions disclosed in PTLs 1 and 2. According to the invention disclosed in PTL 1, the invention relates to a plant maintenance support technique, in particular, a system maintenance method can be selected and determined based on the degree of urgency and a comprehensive effect index obtained by weighting a maintenance effect of facilities and devices of a large-scale plant. Further, according to the invention disclosed in PTL 2, it is possible to create a maintenance plan while evaluating a trade-off between a failure risk of a maintenance target device and a maintenance cost.

Citation List

Patent Literatures

PTL 1: JP 2008-015775 A
PTL 2: JP 2009-217718 A

Summary of Invention

Technical Problem

According to the inventions of PTLs 1 and 2, it is possible to create a plan in consideration of metrics such as risks and costs, but the condition as the base of plan creation remains the original constraint condition. By changing the constraint conditions, a more desirable plan than before the change may be created. However, in the related art, how to change the constraint condition is not clear. Therefore, a plan creator needs to repeat evaluating the plan created by changing the constraint condition. Therefore, it takes a lot of time to obtain a desirable plan.

The present invention has been made in view of such a background, and an object thereof is to provide a schedule creation support device and a schedule creation support method capable of supporting creation of a desired schedule under constraint conditions.

Solution to Problem

In order to solve the above problem, a schedule creation support device according to the present invention includes: a reception unit that receives a plurality of tasks, a constraint condition in schedule generation for assigning execution dates and times to the plurality of tasks, metrics for evaluating the generated schedule, and a KPI; a constraint condition generation unit that generates a plurality of generation constraint conditions by adding a deviation to the constraint conditions; a schedule generation unit that generates an optimal schedule that satisfies the generation constraint condition; and a constraint evaluation unit that outputs a generation constraint condition corresponding to a schedule in which the KPI is best among the generated schedules.

Advantageous Effects of Invention

According to the present invention, it is possible to provide a schedule creation support device and a schedule creation support method capable of supporting creation of a desired schedule under constraint conditions. Objects, configurations, and advantageous effects other than those described above will be clarified by the descriptions of the following embodiments.

Brief Description of Drawings

[FIG. 1] FIG. 1 is a functional block diagram of a schedule creation support device according to the present embodiment.
[FIG. 2] FIG. 2 is a flowchart of constraint evaluation processing according to the present embodiment.
[FIG. 3] FIG. 3 is a graph of a score S(t) according to a modification example of the present embodiment.
[FIG. 4] FIG. 4 is a screen configuration diagram of a constraint evaluation screen according to a modification example of the present embodiment.

Description of Embodiments

Hereinafter, a schedule creation support device in a form (embodiment) for carrying out the present invention will be described. The schedule creation support device generates a plurality of generation constraint conditions obtained by adding a deviation to the given constraint conditions. Next, the schedule creation support device assigns an execution date and time to a task under the generation constraint condition to generate a schedule. The constraint conditions are costs and deadlines required for the entire task execution, the total number of workers, working time per day, the number of pieces of equipment necessary for the task execution, and the like.

Subsequently, the schedule creation support device performs principal component analysis using metrics as variables for the generated schedule, and performs clustering analysis of the schedule based on the obtained principal components. Further, the schedule creation support device specifies a schedule having the best KPI (Key Performance Indicator) among schedules closest to the center of the cluster, and specifies a generation constraint condition corresponding to the schedule.

Note that the best means the best or a best range. The best is, for example, a best value of the KPI, and the best range is, for example, a value of the KPI that can be regarded as being substantially equivalent to the best KPI. The best range is, for example, a range of the top 10% of KPIs. The metrics will be described later.

A user of the schedule creation support device refers to the specified generation constraint condition and changes the constraint condition to generate the schedule, whereby the user can know the influence of the constraint condition given to the schedule metrics. The user learns that, for example, by increasing the number of workers being a constraint condition by 5%, the number of tasks for which work is completed by a desired deadline, which is a metric, increases by 15%. The user who understands the influence of the constraint condition given to the metrics can obtain a desired schedule by adjusting the constraint condition.

<<Configuration of Schedule Creation Support Device>>

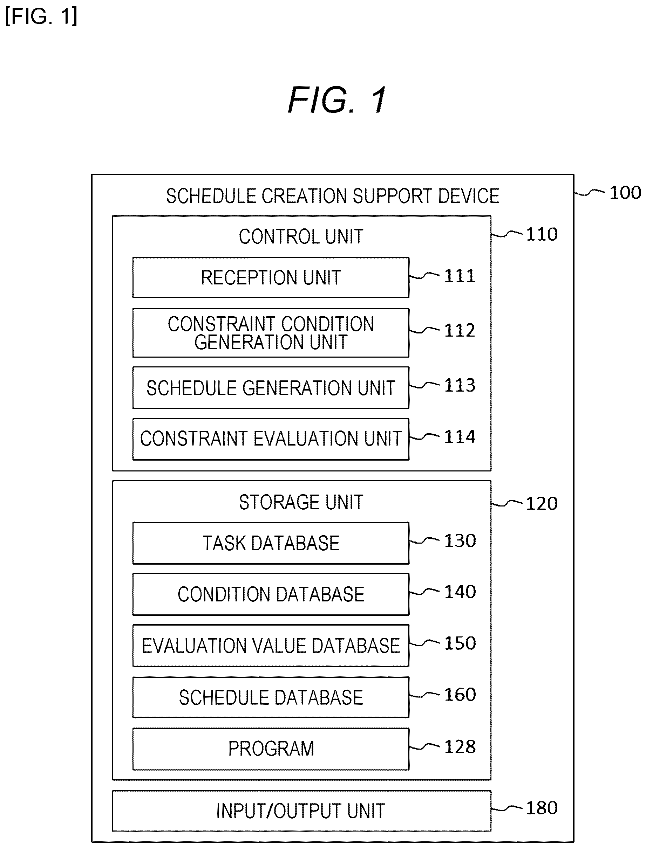

FIG. 1 is a functional block diagram of a schedule creation support device 100 according to the present embodiment. The schedule creation support device 100 is a computer, and includes a control unit 110, a storage unit 120, and an input/output unit 180. A user interface device such as a display, a keyboard, and a mouse is connected to the input/output unit 180. The input/output unit 180 may include a communication device and be able to transmit and receive data to and from another device. In addition, a medium drive may be connected to the input/output unit 180 so that data can be exchanged by using a recording medium.

<<Schedule Creation Support Device: Storage Unit>>

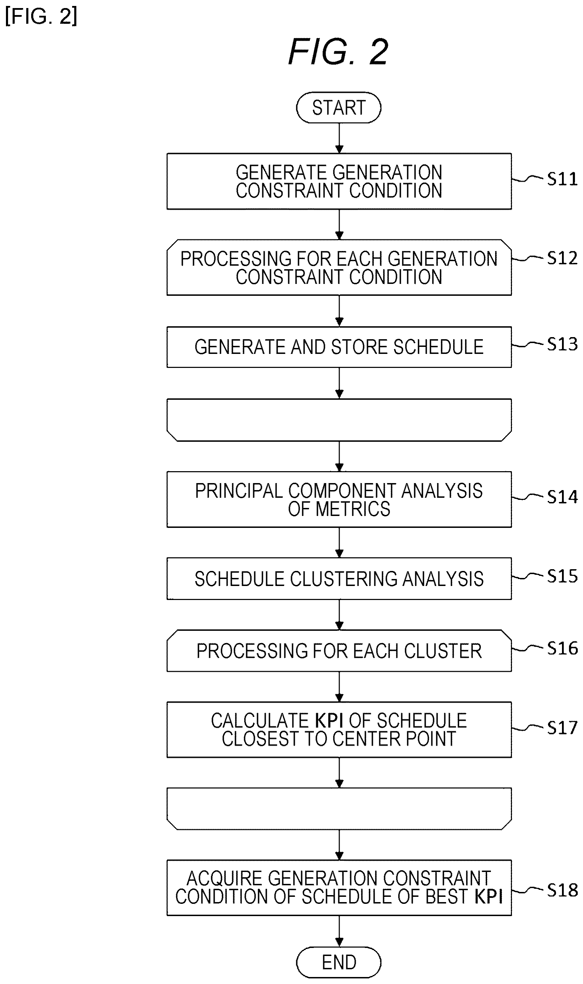

The storage unit 120 is configured to include a storage device such as a ROM (Read Only Memory), a RAM (Random Access Memory), or an SSD (Solid State Drive). The storage unit 120 stores a task database 130, a condition database 140, an evaluation value database 150, a schedule database 160, and a program 128. The program 128 includes description of constraint evaluation processing (see FIG. 2) which will be described later.

The task database 130 stores, as information regarding a task, a name, the number and skills of workers required for execution of the task, priority, an execution cycle (interval) and an execution deadline (allowable elapsed time from last execution date and time to next task execution) of the task that is repeatedly executed, and the like.

The condition database 140 stores a condition for assigning the execution date and time to a task. Conditions (assignment conditions) related to individual tasks include the order of execution of a series of tasks, the number and skills of workers required to execute the task, equipment required for the task, and the like. In addition to such assignment conditions, there are constraint conditions of schedule creation such as cost required for the entire task execution, the number of pieces of equipment, the number of workers, and working time per day.

The evaluation value database 150 stores a schedule metric calculation method (calculation expression). The metrics include the cost required for the entire task execution, the number of tasks that are delayed beyond the deadline, the number of tasks that comply with the assignment conditions, the total delay amount (risk) of the tasks that are delayed beyond the deadline, and the like. The evaluation value database 150 also stores a calculation method of a KPI calculated based on the metrics.

The schedule database 160 stores the generated schedule (execution date and time of the task) in association with a generation constraint condition which will be described later.

<<Schedule Creation Support Device: Control Unit>>

The control unit 110 is configured to include a CPU (Central Processing Unit), and includes a reception unit 111, a constraint condition generation unit 112, a schedule generation unit 113, and a constraint evaluation unit 114.

The reception unit 111 receives a task, an assignment condition, a constraint condition, and a calculation expression of a metric or a KPI, and stores the task, the assignment condition, the constraint condition, and the calculation expression in the task database 130, the condition database 140, and the evaluation value database 150.

The constraint condition generation unit 112 generates a generation constraint condition by adding a deviation to the received constraint condition. For example, it is assumed that, as constraint conditions, the number of workers is 50, the working time per day is 7, and the total delay amount is 260. The constraint condition generation unit 112 sets the number of workers with deviation to, for example, 48, 49, 50, 51, and 52. In addition, the constraint condition generation unit 112 sets the work time per day with deviation to, for example, 6.8, 6.9, 7, 7.1, and 7.2. Furthermore, the constraint condition generation unit 112 sets the total delay amount with the deviation to, for example, 250, 255, 260, 265, and 270. Then, the constraint condition generation unit 112 generates, as the generation constraint condition, a combination of 125 in total of (48, 6.8, 250), (48, 6.8, 255),..., and (52, 7.2, 270), which are combinations of these constraint conditions with the deviation.

Note that, in the above example, the constraint conditions with the deviation are equal intervals, but may be random intervals. In other words, the constraint condition generation unit 112 may generate the generation constraint condition using a random number as a deviation.

The schedule generation unit 113 generates a schedule by assigning the execution date and time to a task under the assignment condition and the generation constraint condition. More specifically, the schedule generation unit 113 assigns the execution date and time to the task by solving the optimization problem for the purpose of optimizing the KPI under the assignment condition and the generation constraint condition.

The constraint evaluation unit 114 performs principal component analysis using schedule metrics as variables, and performs schedule clustering analysis based on the obtained principal component. Next, the constraint evaluation unit 114 specifies a schedule in which the KPI is best among schedules closest to the center of the cluster and specifies a generation constraint condition corresponding to the schedule. Note that the KPI being best may be one of the best KPIs, or may be, for example, the top 10% of KPIs (KPIs in the best range).

As described above, the schedule creation support device 100 includes the reception unit 111 that receives a plurality of tasks, a constraint condition in schedule generation for assigning the execution date and time to the plurality of tasks, metrics for evaluating the generated schedule, and a KPI.

In addition, the schedule creation support device 100 includes the constraint condition generation unit 112 that generates a plurality of generation constraint conditions obtained by adding a deviation to the constraint conditions.

The schedule creation support device 100 includes the schedule generation unit 113 that generates an optimal schedule that satisfies the generation constraint condition.

The schedule creation support device 100 further includes the constraint evaluation unit 114 that performs principal component analysis on metrics of the generated schedule, performs clustering analysis of the schedule based on the obtained principal component, and outputs the generation constraint condition corresponding to a schedule in which the KPI is best among schedules closest to the center of the cluster.

<<Constraint Evaluation Processing>>

FIG. 2 is a flowchart of constraint evaluation processing according to the present embodiment. When the constraint evaluation processing starts, the reception unit 111 assumes that the task, the assignment condition, the constraint condition, the metric, and the KPI have been received.

In step S11, the constraint condition generation unit 112 generates a generation constraint condition by combining the constraint conditions with a deviation, which are obtained by adding the deviation to the constraint condition received by the reception unit 111.

In step S12, the schedule generation unit 113 starts processing of repeating step S13 for each generation constraint condition generated in step S11.

In step S13, the schedule generation unit 113 generates a schedule by assigning the execution date and time to a task under the assignment condition and the generation constraint condition. Then, the schedule generation unit 113 stores the generated schedule in the schedule database 160 in association with the generation constraint condition.

In step S14, the constraint evaluation unit 114 performs principal component analysis using the schedule metrics as variables, and calculates the principal component.

In step S15, the constraint evaluation unit 114 performs clustering analysis of the schedule based on a distance based on the principal component calculated in step S14 to obtain a cluster.

In step S16, the constraint evaluation unit 114 starts processing of repeating step S17 for each cluster obtained in step S15.

In step S17, the constraint evaluation unit 114 calculates the KPI of the schedule closest to the center of the cluster.

In step S18, the constraint evaluation unit 114 specifies the schedule of being the best KPI among the KPIs calculated in step S17. Then, the constraint evaluation unit 114 refers to the schedule database 160 and acquires and outputs a generation constraint condition corresponding to the schedule.

<<Features of Schedule Creation Support Device>>

The schedule creation support device 100 creates a schedule under the generation constraint condition obtained by adding the deviation to a designated constraint condition (received by the reception unit 111). Then, the schedule creation support device 100 performs clustering analysis and outputs a generation constraint condition corresponding to a schedule in which the KPI is the best among schedules close to the cluster center. This generation constraint condition is a constraint condition that is close to the designated constraint condition and has a KPI better than the KPI of the schedule generated under the designated constraint condition.

The user of the schedule creation support device 100 refers to such a generation constraint condition and changes the original constraint condition (designated constraint condition) to generate the schedule, whereby the user can know the influence of the constraint condition given to the schedule metrics. In addition, the user can obtain a desired schedule by adjusting the constraint conditions.

<<Modification Example: Score of Task>>

Some tasks are executed periodically (at predetermined intervals). Examples of such tasks include inspection and component replacement. For such a task, it is desirable that the execution date and time is assigned to a time point of the interval after the previous execution, and it is not desirable that the execution date and time is too early or too late.

As a metric of a schedule including such a task, a score in which the execution date and time being a predetermined interval has the highest value may be provided for the execution date and time of the task. The schedule generation unit 113 sets an objective function that desirably has a high score and solves an optimization problem, thereby assigning the execution date and time close to a predetermined interval to such a task. A method of calculating such a score will be described below. First, variables used for calculation will be described.

$D_{LAST}$ is the last (previous) execution date and time of the task.

f is a desired execution interval (cycle) of the task.

$D_I$ is a desired execution date and time of the task, and $D_I = D_{LAST} + f$.

t is the execution date and time of the task.

S is a score. The score is a function S(t) having the execution date and time t as a parameter.

r is an elapsed time from the last execution date and time, and $t = D_{LAST} + r$.

u is a parameter indicating the degree of urgency. The score S(t) rapidly increases near $D_I$ as u increases. u corresponds to a shape parameter of the Weibull distribution.

$\lambda$ is the maximum value of r and is the elapsed time from the allowable last execution date and time. $\lambda$ corresponds to a scale parameter of the Weibull distribution.

w(r) is a cumulative distribution function of the Weibull distribution having r ($= t - D_{LAST}$), which is an elapsed time from the last execution date and time, as a parameter, and is represented by Expression (1).

W(t) is a cumulative distribution function of the Weibull distribution having the execution date and time t ($= D_{LAST} + r$) as a parameter, and is represented by Expression (2).

[Math. 1]

$$w(r) = 1 - \exp(-(\frac{r}{\lambda})^u) \qquad\qquad (1)$$

$$W(t) = w(r) = 1 - \exp(-(\frac{t - D_{LAST}}{\lambda})^u) \qquad\qquad (2)$$

Next, constants used for calculating the score S(t) will be described. $a_1$, $b_1$, $a_2$, $b_2$, and $c_2$ that are constants that do not depend on the execution date and time t are obtained from the following Expressions (3) to (7).

[Math. 2]

$$a_1 w(f)^3 + b_1 w(f)^2 = 1 \qquad\qquad (3)$$

$$3a_1 w(f)^2 + 2b_1 w(f) = 0 \qquad\qquad (4)$$

$$a_2 w(f)^2 + b_2 w(f) + c_2 = 1 \qquad\qquad (5)$$

$$2a_2 w(f) + b_2 = 0 \qquad\qquad (6)$$

$$a_2 w(\lambda)^2 + b_2 w(\lambda) + c_2 = 0 \qquad\qquad (7)$$

Expressions (3) to (6) are conditions for ($S(D_I) = 1$) in which the score S(t) at $D_1$ (= $D_{LAST}$ + f), which is the desired execution date and time of the task, is 1 (see Expressions (8) and (9) which will be described later). Expression (7) is a condition for ($S(D_{LAST}+\lambda) = 1$) in which the score S(t) at $D_{LAST}$ + A, which is the allowable last execution date and time of the task, is 0 (see Expressions (9) and (10) which will be described later). By solving Expressions (3) and (4), $a_1$ and $b_1$ are obtained. By solving Expressions (5) to (7), $a_2$, $b_2$, and $c_2$ are obtained.

Using the obtained $a_1$, $b_1$, $a_2$, $b_2$, and $c_2$, the score S(t) is defined as represented in the following Expressions (8) to (11). When $t \le D_{LAST}$, S(t) is set to 0. When $D_{LAST} \le t \le D_I$, S(t) is calculated using the following Expression (9). When $D_I \le t \le D_{LAST} + \lambda$, S(t) is calculated using the following Expression (10). When $t \ge D_{LAST}$ + A, S(t) is set to 0.

[Math. 3]

$$S(t) = 0 \qquad (t \le D_{LAST}) \qquad\qquad (8)$$

$$S(t) = a_1 W(t)^3 + b_1 W(t)^2 \qquad (D_{LAST} \le t \le D_I) \qquad\qquad (9)$$

$$S(t) = a_2 W(t)^2 + b_2 W(t) + c_2 \qquad (D_I \le t \le D_{LAST} + \lambda) \qquad\qquad (10)$$

$$S(t) = 0 \qquad (t \ge D_{LAST} + \lambda) \qquad\qquad (11)$$

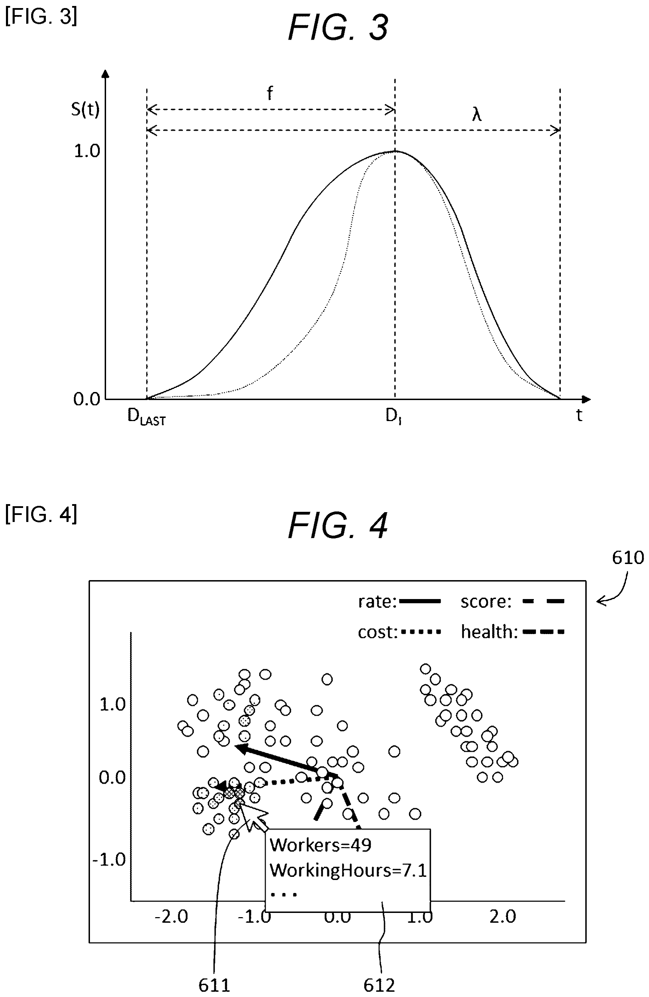

FIG. 3 is a graph of the score S(t) according to the modification example of the present embodiment. In the dotted line graph, u that is a shape parameter is larger than that in the solid line graph, and the slope of the graph near $t = D_I$ is steep. The score S(t) is the best value 1 at $t = D_I = D_{LAST}$ + f and 0 at $t = D_{LAST}$ + $\lambda$.

For such a task that is periodically executed, the schedule generation unit 113 calculates the score and sets the objective function such that the value becomes better as the sum of the scores increases, whereby a schedule to which the execution date and time close to $D_I$ is assigned is generated.

Such a score S(t) may be used not only as the metric of a task that is periodically executed but also as the metric of a task having the desirable execution date and time.

The score S(t) described above is a score based on the cumulative distribution function w(r) of the Weibull distribution, and may be a score that has the maximum value at the desired execution date and time and decreases as the execution date and time deviates from the desired execution date and time.

As described above, the task includes a periodic task executed at a predetermined cycle.

The schedule generation unit 113 calculates, for the execution date and time of the periodic task, a score having a value decreasing as date and time deviates more from date and time after a predetermined cycle when the date and time after the predetermined cycle from a previous execution date and time is set to have a maximum value, and generates the schedule such that a sum of scores of the periodic tasks becomes high.

The score is calculated based on the value of a Weibull cumulative distribution function with respect to the period length from previous execution.

<<Modification Example: Constraint Evaluation Screen>>

In the above-described embodiment, the constraint evaluation unit 114 outputs the generation constraint condition in which the KPI is the best (highest). The constraint evaluation unit 114 may visualize a desired schedule with a high KPI.

FIG. 4 is a screen configuration diagram of a constraint evaluation screen 610 according to a modification example of the present embodiment. The horizontal axis is a first principal component, and the vertical axis is a second principal component. The circle is a schedule, and the darker hatching indicates the higher KPI. Solid or dotted arrows indicate metrics. When the user places a pointer 611 on a schedule, the constraint evaluation unit 114 displays the generation constraint condition corresponding to the schedule in a pop-up window 612. Note that the constraint evaluation unit 114 may display metrics or KPIs in the pop-up window 612. By operating such a constraint evaluation screen 610, the user can understand the influence of the constraint condition on the KPI and the metrics.

As described above, the constraint evaluation unit 114 displays a result of the clustering analysis, and displays the generation constraint condition corresponding to a schedule designated among displayed schedules.

<<Modification Example: Constraint Evaluation Unit>>

In the above-described embodiment, the constraint evaluation unit 114 performs clustering analysis and outputs a generation constraint condition of a schedule in which the KPI is the best among schedules close to the cluster center. The constraint evaluation unit 114 may output a generation constraint condition of a schedule in which the KPI is the highest among the generated schedules.

As described above, the schedule creation support device 100 includes the constraint evaluation unit 114 that outputs the generation constraint condition corresponding to the schedule in which the KPI is the best among the generated schedules.

<<Other Modification Examples>>

Although some embodiments of the present invention have been described above, these embodiments are merely examples and do not limit the technical scope of the present invention. For example, the description has been made on the assumption that there is one KPI in the constraint evaluation processing (see FIG. 2), and there may be a plurality of KPIs. The schedule creation support device 100 may output the schedule generation constraint condition in which each KPI is the best (the best range).

The present invention can take various other embodiments, and various changes such as omissions and substitutions can be made without departing from the gist of the present invention. The embodiments and their modifications are included in the scope and the gist of the invention described in the present specification, and are also included in the invention described in the claims and the scope of equivalents thereof.

Reference Signs List

100 schedule creation support device
111 reception unit
112 constraint condition generation unit
113 schedule generation unit
114 constraint evaluation unit
130 task database

140    condition database
150    evaluation value database
160    schedule database
610    constraint evaluation screen

**Claims**

1. A schedule creation support device comprising:

   a reception unit that receives a plurality of tasks, a constraint condition in schedule generation for assigning execution dates and times to the plurality of tasks, metrics for evaluating the generated schedule, and a KPI;
   a constraint condition generation unit that generates a plurality of generation constraint conditions by adding a deviation to the constraint conditions;
   a schedule generation unit that generates an optimal schedule that satisfies the generation constraint condition; and
   a constraint evaluation unit that outputs a generation constraint condition corresponding to a schedule in which the KPI is best among the generated schedules.

2. The schedule creation support device according to claim 1, wherein

   the constraint evaluation unit
   performs principal component analysis on metrics of the generated schedule,
   performs clustering analysis of the schedule based on the obtained principal component, and
   outputs the generation constraint condition corresponding to a schedule in which the KPI is best among schedules closest to the center of the cluster.

3. The schedule creation support device according to claim 2, wherein

   the constraint evaluation unit
   displays a result of the clustering analysis, and
   displays the generation constraint condition corresponding to a schedule designated among displayed schedules.

4. The schedule creation support device according to claim 1, wherein

   the task includes a periodic task executed at a predetermined cycle, and
   the schedule generation unit
   calculates, for the execution date and time of the periodic task, a score having a value decreasing as date and time deviates more from date and time after a predetermined cycle when the date and time after the predetermined cycle from a previous execution date and time is set to have a maximum value, and
   generates the schedule such that a sum of scores of the periodic tasks becomes high.

5. The schedule creation support device according to claim 4, wherein
   the score is calculated based on a value of a Weibull cumulative distribution function with respect to a period length from previous execution.

6. A schedule creation support method for causing a schedule creation support device to execute:

   a step of receiving a plurality of tasks, a constraint condition in schedule generation for assigning execution dates and times to the plurality of tasks, metrics for evaluating the generated schedule, and a KPI;
   a step of generating a plurality of generation constraint conditions by adding a deviation to the constraint conditions;
   a step of generating an optimal schedule that satisfies the generation constraint condition; and
   a step of outputting a generation constraint condition corresponding to a schedule in which the KPI is best among the generated schedules.

[FIG. 1]

# FIG. 1

| SCHEDULE CREATION SUPPORT DEVICE | ~100 |
|---|---|

| CONTROL UNIT | ~110 |
|---|---|

| RECEPTION UNIT | ~111 |
|---|---|

| CONSTRAINT CONDITION GENERATION UNIT | ~112 |
|---|---|

| SCHEDULE GENERATION UNIT | ~113 |
|---|---|

| CONSTRAINT EVALUATION UNIT | ~114 |
|---|---|

| STORAGE UNIT | ~120 |
|---|---|

| TASK DATABASE | ~130 |
|---|---|

| CONDITION DATABASE | ~140 |
|---|---|

| EVALUATION VALUE DATABASE | ~150 |
|---|---|

| SCHEDULE DATABASE | ~160 |
|---|---|

| PROGRAM | ~128 |
|---|---|

| INPUT/OUTPUT UNIT | ~180 |
|---|---|

[FIG. 2]

# FIG. 2

```
                    ( START )
                       │
                       ▼
        ┌─────────────────────────────┐
        │   GENERATE GENERATION       │──── S11
        │   CONSTRAINT CONDITION      │
        └─────────────────────────────┘
                       │
                       ▼
        ┌─────────────────────────────┐
        │  PROCESSING FOR EACH        │──── S12
        │  GENERATION CONSTRAINT      │
        │  CONDITION                  │
        └─────────────────────────────┘
                       │
                       ▼
        ┌─────────────────────────────┐
        │  GENERATE AND STORE SCHEDULE│──── S13
        └─────────────────────────────┘
                       │
                       ▼
        ┌─────────────────────────────┐
        │                             │
        └─────────────────────────────┘
                       │
                       ▼
        ┌─────────────────────────────┐
        │  PRINCIPAL COMPONENT        │──── S14
        │  ANALYSIS OF METRICS        │
        └─────────────────────────────┘
                       │
                       ▼
        ┌─────────────────────────────┐
        │  SCHEDULE CLUSTERING        │──── S15
        │  ANALYSIS                   │
        └─────────────────────────────┘
                       │
                       ▼
        ┌─────────────────────────────┐
        │  PROCESSING FOR EACH        │──── S16
        │  CLUSTER                    │
        └─────────────────────────────┘
                       │
                       ▼
        ┌─────────────────────────────┐
        │  CALCULATE KPI OF SCHEDULE  │──── S17
        │  CLOSEST TO CENTER POINT    │
        └─────────────────────────────┘
                       │
                       ▼
        ┌─────────────────────────────┐
        │                             │
        └─────────────────────────────┘
                       │
                       ▼
        ┌─────────────────────────────┐
        │  ACQUIRE GENERATION         │──── S18
        │  CONSTRAINT CONDITION OF    │
        │  SCHEDULE OF BEST KPI       │
        └─────────────────────────────┘
                       │
                       ▼
                    ( END )
```

[FIG. 3]

# FIG. 3

[FIG. 4]

# FIG. 4

## INTERNATIONAL SEARCH REPORT

| International application No. |
|---|
| **PCT/JP2024/008751** |

| **A.** | **CLASSIFICATION OF SUBJECT MATTER** |
|---|---|

*G06Q 50/04*(2012.01)i
FI: G06Q50/04

According to International Patent Classification (IPC) or to both national classification and IPC

| **B.** | **FIELDS SEARCHED** |
|---|---|

Minimum documentation searched (classification system followed by classification symbols)

G06Q50/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | JP 2018-165952 A (MITSUBISHI HEAVY INDUSTRIES, LTD.) 25 October 2018 (2018-10-25) paragraphs [0020], [0028] | 1-3, 6 |
| A | paragraphs [0020], [0028] | 4-5 |
| Y | JP 2022-179882 A (HITACHI, LTD.) 06 December 2022 (2022-12-06) paragraphs [0013], [0069] | 1-3, 6 |
| A | paragraphs [0013], [0069] | 4-5 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/008751**

| Patent document cited in search report | | Publication date (day/month/year) | Patent family member(s) | Publication date (day/month/year) |
|---|---|---|---|---|
| JP 2018-165952 A | | 25 October 2018 | (Family: none) | |
| JP 2022-179882 A | | 06 December 2022 | US 2022/0374801 A1 paragraphs [0012], [0088] | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008015775 A
- JP 2009217718 A